# EUROPÄISCHE PATENTANMELDUNG

(11) **EP 1 116 433 A1**
(43) Veröffentlichungstag der Anmeldung: **18.07.2001**
(21) Anmeldenummer: 00100632.9
(22) Anmeldetag: 13.01.2000
(51) Int. Cl.: A01G 9/02

(54) **Verfahren zum Herstellen eines Pflanz- oder Kulturgefässes und ein solches Pflanzgefäss**

(71) Anmelder: Zirfas, Udo, 41844 Wegberg (DE); Belger, Christian, 47057 Duisburg (DE)
(72) Erfinder: Belger, Christian, 47057 Duisburg (DE); Fernando, Merryl, Nainamadama, Sri Lanka (SL)
(74) Vertreter: Flaig, Siegfried, Dipl.-Ing.

(57) **Zusammenfassung**

Die Herstellung eines Pflanz- oder Kulturgefäßes (7) erfolgt entweder nach einem Verfahren, bei dem gewässerte, entsalzte und getrocknete (Kokosnuß-) Fasern gegen ein mit biologisch abbaubarem Klebstoff (Latex) belegten Formstempel (13) gedrückt, geblasen oder geführt werden und in einer Hohlform (19) mit dem Formstempel (13) fertigvulkanisiert werden, oder nach einem Verfahren, bei dem Faserronden (27) ohne Vulkanisierung vorgepreßt und später im Formwerkzeug fertigvulkanisiert werden oder nach einem Verfahren, bei dem Fasern (4a) gleichmäßig verteilt sind und ein oberer Seitenwandteil (17) mit größerer Wanddicke (20) gegenüber dem unteren Wand- und Bodenbereich (22) vorgesehen ist.

## Beschreibung

Die Erfindung betriftt ein Verfahren zum Herstellen eines Pflanz- oder Kulturgefäßes aus faserigen, biologisch abbaubaren Werkstoffen, insbesondere aus Kokosnußfasern und das Pflanzgefäß selbst, nach den weiteren Merkmalen der Oberbegriffe der Patentansprüche 1, 9, 11 und 18.

Ein solches Pflanzgefäß aus Kokosnußfasern ist bekannt (DE-Gbm 81 18 099.3). Das bekannte Gefäß ist durch die Verwendung von Kokosnußfasern, die für die Pflanzenwurzeln durchlässig sein sollen, aus einem Kokosfaservlies hergestellt, bei dem naturgemäß nur wirr orientierte Kokosfasern vorhanden sein können. Der Durchtritt von Pflanzenwurzeln durch die sehr dick dargestellte Gefäßwandung wird daher bei wirr orientierten Kokosfasern behindert und außerdem entsteht eine nachteilige Staunässe. Je dicker die Gefäßwandung ist, desto länger dauert der biologische Abbau in der Erde.

Das bezeichnete Pflanzgefäß ist außerdem bekannt als einstückig ausgeführtes Gefäß mit einem Bodenteil und einem Seitenwandteil (WO 96/34520 und AU-PS B583 294). Das bekannte Gefäß soll sich durch zumindest im Seitenwandteil integrierte Aussteifungsrippen in der verbesserten Formstabilität und Handhabung auszeichnen. Generell hängt die Formstabilität jedoch von der absoluten Wanddicke ab und mit zunehmender Wanddicke wird das Pflanzenwachstum an den Pflanzenwurzeln behindert. Gerade die durch Überlappungen an aus dem Vlies hergestellten Ronden mit radialen Einschnitten erhaltenen Verdichtungen des Seitenwandteils führen zu Hemmnissen des Pflanzenwachstums. Überlappungen und Verdichtungen bewirken im übrigen nicht eine gewünschte Formsteifigkeit und eine verbesserte Handhabung sondern die Schwierigkeit, daß die Wurzeln diese Stellen nicht durchdringen können und dadurch ein Absterben der betreffenden Wurzelbereiche befürchtet werden muß. Überlappungen, Versteifungsrippen und Verdichtungen, die Staunässe verursachen, sind daher gerade schädlich und werden nicht durch eine verbesserte Formstabilität aufgewogen.

Der Erfindung liegt die Aufgabe zugrunde, unter Vermeidung von Überlappungen, Verdichtungen und Versteifungsrippen ein Verfahren zum Herstellen eines Gefäßes und das Gefäß selbst vorzuschlagen, die über die durchlässige Wanddicke eine natürliche Durchdringung der Pflanzenwurzeln gestatten und dennoch eine für Transport und Handhabung ausreichende Formstabilität aufweisen.

Die gestellte Aufgabe wird aufgrund eines ersten Vorschlags erfindungsgemäß durch die kennzeichnenden Merkmale des Patentanspruches 1 gelöst. Nach diesem Verfahren ist es möglich, bei teils gleichmäßiger teils ungleichmäßiger Verteilung der Fasern eine Wandung zu bilden, die ausreichende Formstabilität aufweist und dennoch das Wurzelwachstum, d.h. den Durchtritt einzelner Wurzelzweige durch gleichdicke / ungleichdicke Wandungsteile nicht behindert.

Dieses Herstellverfahren wird dadurch begünstigt, daß die Fasern durch Wasser und Wärme und anschließendem Trocknen gereinigt und vereinzelt werden. Das Vereinzeln dient auch dem Zweck, die Fasern von Hand oder durch einen Luftstrom an den gewünschten Ort (rotierender Formstempel) in der gewünschten Menge (Dicke) zu bringen. Durch das Waschen findet außerdem eine Entsalzung der meist salzhaltigen Kokosnußfasern statt. Der Salzgehalt der Kokosfasern kann je nach Herkunft relativ hoch sein, was sich unter Umständen auf die Pflanzenanzucht negativ auswirken könnte. Die Kokosfasern können daher auch bei Bildung eines Vlieses einer solchen Behandlung vor dem Formen des Vlieses unterzogen werden, um denselben Vorteil zu nutzen.

Für die Mengenfertigung solcher Gefäße, die in einer gleichbleibenden Toleranz herzustellen sind, ist es ferner günstig, daß eine für das zu pressende Volumen des Gefäßes abgewogene Menge an (abgelängten) Fasern bereitgestellt wird.

Das Verfahren ist ferner dahingehend ausgestaltet, daß eine auf die abgewogene Menge der Fasern abgestimmte Menge Latex in einen Behälter für ein Sprühgerät gegeben wird.

Eine andere Verbesserung des Verfahrens sieht vor, daß die Fasern mit unterschiedlicher, größerer Schichtdicke auf einen abmessungsmäßig ( z.B. bei einem runden Gefäß) größeren Bereich des mit Latex beschichteten Formwerkzeugs aufgebracht werden und mit einer kleineren Schichtdicke auf einen abmessungsmäßig kleineren Bereich des (z.B. rotierenden) Formwerkzeugs. Hierbei kann je nach Gefäßform der ( im Durchmesser) abmessungsmäßig größere Bereich oben und der bemessungsmäßig kleinere Bereich unten, z.B. bei einer kegeligen Gefäßform, vorgesehen sein.

Das mit Fasern beschichtete Formwerkzeug wird nach weiteren Merkmalen durch Strahlungswärme beheizt und die Mischung aus Fasern und Latex vorvulkanisiert. Die Ausnutzung einer natürlichen Wärmequelle oder einer ansonst nicht genutzten Abwärmequelle trägt zu einer ökonomischen Fertigung bei.

In diesem Sinn ist es auch vorteilhaft und besonders in warmen Ländern sinnvoll, daß das mit Fasern beschichtete Formwerkzeug durch Aussetzen der Sonnenstrahlung vorvulkanisiert wird.

In Fällen von besonders dicken oberen Gefäßrändern kann es auch vorteilhaft sein, daß ein beim Zusammenpressen der hohlen Preßform und des Preßstempels sich bildender Gefäßrand mit unstetem Verlauf rundgeschnitten wird.

Die gestellte Aufgabe wird aufgrund eines zweiten Vorschlags erfindungsgemäß für ein Gefäß durch die kennzeichnenden Merkmale des Patentanspruches 9 gelöst. Die Vorteile sind ein oberer, die Gefäßstabilität wesentlich positiv beeinflussender Bereich und ein dünnerer, unterer Bereich, der ein hemmnisfreier Pflanzenwurzelwuchs gestattet. Der Übergang zwischen den unterschiedlichen Bereichen kann durch einen stetigen Verlauf oder gestuft erfolgen.

Eine besonders vorteilhafte Ausführungsform des Gefäßes mit unterschiedlichen Wanddicken besteht darin, daß der außen kegelförmig verlaufende obere Seitenwandteil innen mit gleicher Wanddicke verläuft und sich daran anschließend ein abweichender Kegelwinkel bildend, die Wanddicke bis zum Bodenteil reduziert ist. Dadurch wird insbesondere im Bodenbereich das Wurzelwachstum nicht behindert.

Die gestellte Aufgabe wird aufgrund eines dritten Vorschlags erfindungsgemäß durch die kennzeichnenden Merkmale des Patentanspruches 11 gelöst. Dadurch kann, wenn auch in eingeschränktem Umfang, das bisherige , auf einem Vlies und ausgestanzten Ronden beruhende Herstellverfahren auf Gefäße mit erheblich ungleicher Wanddicke ausgedehnt werden, so daß auch hier zunächst die Ronde ohne vulkanisierten Latex-Auftrag gepreßt wird, wobei im unteren Bereich eine Pressung und damit eine Verdünnung der Wandstärke eintritt und im oberen Bereich eine dikkere Wandung erhalten werden kann. Das Endpressen findet sodann nach Zugabe eines erhöhten Latex-Anteils statt und darauf folgt die endgültige Vulkanisierung des Gefäßes, um die Gefäßform zu fixieren.

Vorteilhaft für dieses Verfahren ist sodann, daß das Vlies mit einem gleichmäßigen Faserabstand von durchschnittlich 0,1 bis 5,0 mm hergestellt wird. Ein sehr großer Faserabstand kann später durch Pressen eines großen Volumens noch an den gewünschten Gefäßbereichen reduziert werden.

Aufgrund des vorstehenden Gedankenganges kann es auch vorteilhaft sein, daß die Faserronde mit einer einheitlichen Dicke für den Boden- und Seitenwandteil hergestellt wird.

Das Wurzelwachstum, ein schnellerer und damit ein früherer biologischer Abbau des Gefäßes in der Erde wird ferner bei einer praktischen Ausführungsform dadurch unterstützt, daß die Faserronde bzw. das Vlies mit einer Wanddicke von 2,0 bis 4,0 mm hergestellt wird und der Bodenteil jeweils mit einer etwas geringeren Dicke als der Seitenwandteil.

Eine praktisch vorteilhafte Paarung von Seitenwandteil und Bodenteil ergibt sich dadurch, daß der obere Bereich des Gefäßes mit einer Dicke von 2,0 bis 3,0 mm und der Bodenteil mit einer Dicke von 1,0 bis 2,0 mm gepreßt ist. Auch hier kann der Bodenbereich schneller biologisch abgebaut werden und stellt kein Hindernis für die Pflanzenwurzeln dar und es entsteht keine nachteilige Staunässe.

Das Latex (oder ein anderer, chemisch erzeugter, dem Latex gleichzusetzender ebenfalls biologisch abbaubarer Klebstoff) wird durch Sprühen auf den äußeren und /oder inneren Seitenwandteil und den Bodenteil aufgebracht.

Der Fasermenge entsprechend wird nach weiteren Merkmalen im oberen Bereich des Gefäßes oder im Gefäßrand ein höherer Auftrag an Latex erfolgen als im unteren Bereich.

Die gestellte Aufgabe wird aufgrund eines vierten Vorschlags erfindungsgemäß durch die kennzeichnenden Merkmale des Patentanspruches 18 gelöst. Die Wanddicken-Unterschiede oberer Gefäßbereich / unterer Gefäßbereich, wobei auch noch zusätzlich die Faserabstände berücksichtigt werden können, bildet die Idealform eines solchen biologisch abbaubaren Gefäßes, das eine ausreichende Stabilität für Transport und Handhabung aufweist und dem Wurzelwachstum einer Pflanze angepaßt werden kann.

Es ist außerdem vorteilhaft, daß der obere Bereich des Gefäßes zum unteren Bereich ein Verhältnis an Latex von 25:10 aufweist. Darin ist außerdem ein gewisser Spielraum für die Menge der vereinzelten Fasern gegeben.

Es kann aber auch zweckmäßig sein, mit der Änderung der Fasermenge auszukommen, indem im unteren Bereich etwa 10% weniger Fasern verwendet sind als im oberen Bereich.

Die Festigkeit, die Formstabilität und die Handhabbarkeit des Gefäßes werden ferner dadurch erhöht, daß im oberen Randbereich zumindest zwei diametral gegenüberliegende Haltevorsprünge für die Greifmittel einer Greifvorrichtung vorgesehen sind.

In der Zeichnung sind Ausführungsbeispiele des Verfahrensablaufs und der unterschiedlichen Gefäße dargestellt und werden nachfolgend erläutert.

Es zeigen:
- Fig. 1: eine Seitenansicht einer Vereinzelungsvorrichtung für Kokosfasern, die nachstehend kurz als "Separator" bezeichnet wird,
- Fig. 2: drei verschiedene Größen von Meßbechern für Fasern, von denen jeder einer bestimmten Gefäßgröße entspricht,
- Fig. 3: eine Vorrichtung zum Beschichten eines Formwerkzeugs mit Fasern,
- Fig. 4: zum Vorvulkanisieren in der Sonne aufgestellte vorgepreßte Gefäße (mit noch innen befindlichem Formstempel),
- Fig. 5: eine Vorrichtung in Seitenansicht zum Besprühen des Formstempels mit Latex in einem oberen und einem unteren Bereich,
- Fig. 6: das sich auf dem Formwerkzeug befindliche, mit unterschiedlichen Latex-Mengen besprühte Gefäß,
- Fig. 7: einen senkrechten Schnitt durch das hohle Werkzeug mit Formwerkzeug und darauf befindlichem momentan gepreßtem Gefäß,
- Fig. 8: einen senkrechten Schnitt durch ein mit unterschiedlichem Seitenwandteil und Bodenteil gebildetes Gefäß,
- Fig. 9: ein gegenüber Fig. 8 abgewandeltes, mit einem Kopfring versehenes Gefäß,
- Fig. 10: eine Sammelvorrichtung für eine zu bildende Faserronde mit ungleicher Faserschichtdicke,
- Fig. 11: die Faserronde mit ungleichen Faserschichtdicken außen und im Zentrum und
- Fig. 12: die gemäß den Fig. 10 und 11 entstandene Faserronde zu Beginn des Preßvorgangs über dem Formwerkzeug.

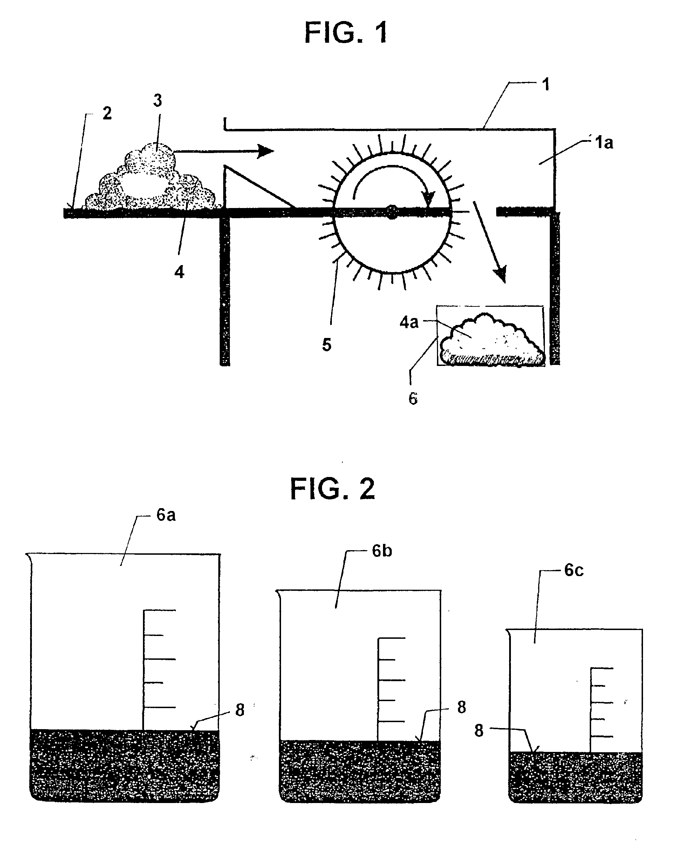

In Fig. 1 ist ein Separator 1 dargestellt mit einem Tisch 2, auf dem ein Haufen 3 roher Kokosnußfasern 4 liegt. Die Kokosnußfasern 4 werden in Wasser gewaschen, entsalzt und gereinigt und in einer Separatorkammer 1a mit einem Transportrad 5 vereinzelt, wobei nach dem Entfeuchten trockene Kokosnußfasern 4a vereinzelt, sorgfältig, locker und ohne Druck in einem Sammelbehälter 6 angehäuft werden. Je nachdem, welche Gefäßgröße, Gefäßform und Gefäßabmessungen angefertigt werden sollen, werden Meßbehälter 6a, 6b, 6c bereitgestellt (Fig. 2), die eine für das zu pressende Volumen eines Gefäßes 7 abgewogene Menge 8 an Fasern 4a enthalten.

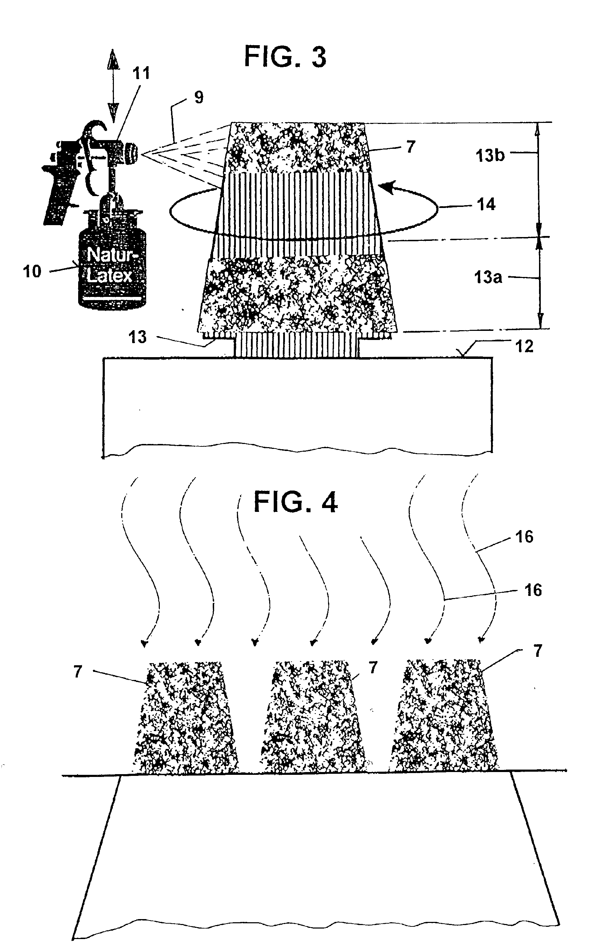

In Fig. 3 ist eine auf die abgewogene Menge 8 an Fasern 4a abgestimmte Menge Latex 9 in einen Aufnahmebehälter 10 für ein Sprühgerät 11 eingefüllt. Auf einem Arbeitstisch 12 befindet sich ein mit unterschiedlichen Bereichen versehener Formstempel 13, der rotierend sein kann, worauf durch einen Pfeil in Drehrichtung 14 hingewiesen ist. Alternativ wird das Sprühgerät 11 stetig um die Achse des beispielhaft konisch ausgeführten Formstempels 13 sowie um einen bestimmten Betrag senkrecht bewegt.

Die Fasern 4a werden nunmehr gegen den Formstempel 13 gedrückt, geblasen, geschleudert oder geführt und haften durch Klebekraft des Latex auf der Oberfläche des Formstempels 13, der mit einer dünnen Latex-Schicht 15 versehen ist. Die Fasern 4a werden z.B. mit einer unterschiedlichen Schichtdicke, der zukünftigen Schichtdicke des Gefäßes 7 entsprechendem Volumen auf einen im Durchmesser größeren Bereich 13a des mit der Latex-Schicht 15 versehenen Formstempels 13 aufgetragen Sand mit einer kleineren Schichtdicke auf einen im Durchmesser kleineren Bereich 13b des Formstempels 13, der im Ausführungsbeispiel in seiner Grundgestalt einen runden Konus bildet.

In Fig. 4 wird gezeigt, daß die, wie beschrieben, vorgefertigten Gefäße 7 durch Strahlungswärme 16 beheizt und die Mischung aus Fasern 4a und der Latex-Schicht 15 damit vorvulkanisiert wird. Die Vorvulkanisierung kann selbstverständlich auch in einer entsprechend regulierten Heizkammer stattfinden. In diesem Stadium liegt die Latex-Mischung in roher Form, wie Gummibaummilchsaft, vor. Diese Form sollte auf Raumtemperatur etwa für eine Stunde während der Vorvulkanisierung gehalten werden. Die Vorvulkanisierung bindet die Fasern 4a an das Latex. Bei einer Behandlung in einer Heizkammer mit 40 bis 50° C kann der Vorbehandlungsprozeß beschleunigt werden gegenüber Raumtemperatur. Aufgrund der beschriebenen Vorbehandlung könnte man das vorgefertigte Gefäß 7 leicht vom Formstempel 13 loslösen.

Nach einer anderen Überlegung ist es nicht notwendig, das gebildete Gefäß 7 während der Vorbehandlung von dem Formstempel 13 abzuheben.

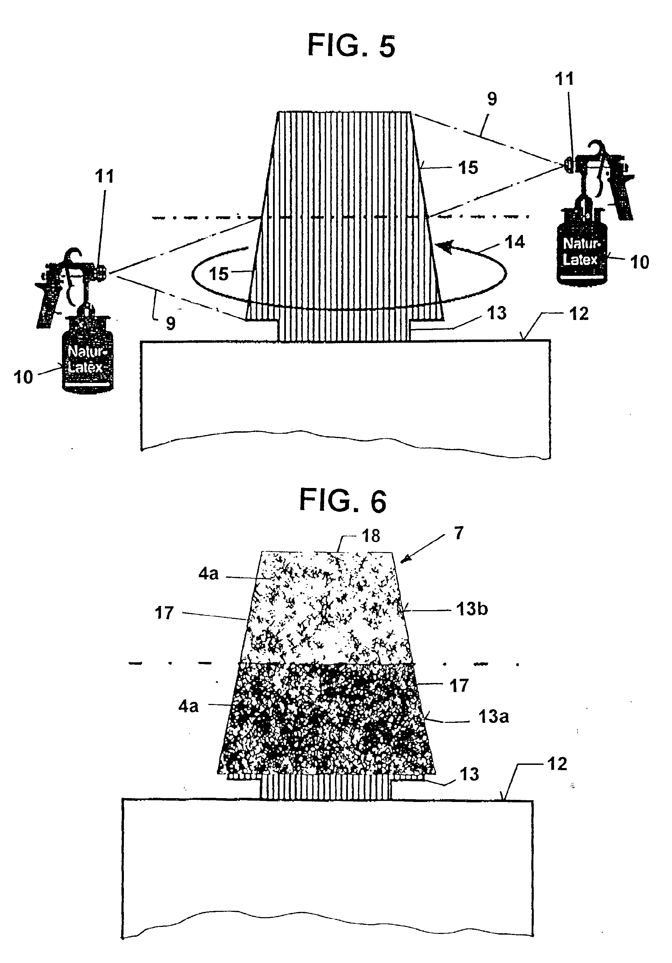

Die Fig. 5 und 6 zeigen ein unterschiedliches Auftragen einer jeweiligen Latex-Schicht 15 auf den im Durchmesser größeren Bereich 13a (unterer Konusbereich) und den im Durchmesser kleineren Bereich 13b (oberer Konusbereich). Dementsprechend entsteht eine dünne Schicht aus Fasern 4a mit einer geringeren Menge an Latex (Gummibaummilchsaft mit chemischen Zusätzen). Das verwendete Latex kann durch jeden anderen chemisch erzeugten, biologisch abbaubaren Klebstoff ersetzt werden.

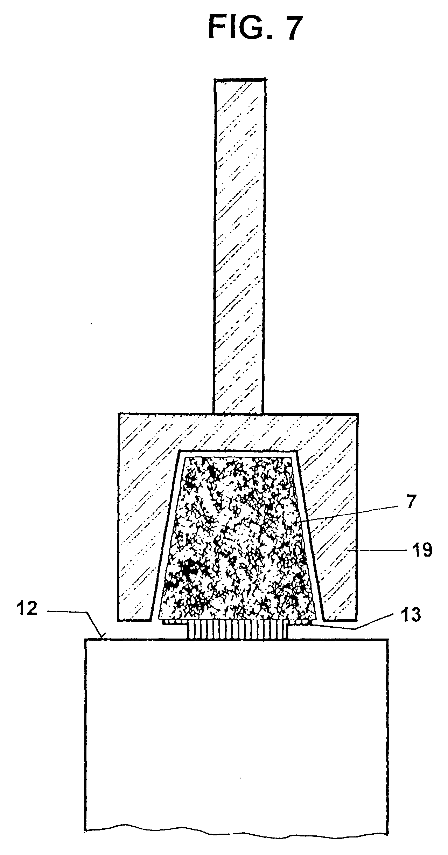

Gemäß Fig. 7 wird ein Gefäß 7, das aus faserigen, biologisch abbaubaren Kokosnußfasern 4a hergestellt wird, zu einem einstückigen Gefäß mit Seitenwandteil 17 und einem Bodenteil 18 gepreßt, wobei das Gefäß 7 in einem mehrschrittigen Verfahren auf dem Formstempel 13 und einer korrespondierenden Hohlform 19 unter Verbindung der Kokosnußfasern 4a durch das Latex vulkanisiert wird. Die Vorstufen sind zu den Fig. 3, 4, 5 und 6 beschrieben. Nunmehr erfolgt, daß die gereinigten, getrockneten, entsalzten und vereinzelten, auf dem positiven Formstempel 13 festgeklebten, eine Schicht bildenden Kokosnußfasern 4a zusammen mit dem Latex in die korrespondierend geformte Hohlform 19 gepreßt werden. Die Hohlform 19 und/oder der Formstempel 13 werden eine begrenzte Zeit beheizt und dann werden beide Teile auseinandergefahren und das fertiggepreßte und fertigvulkanisierte Gefäß 7 kann entnommen werden.

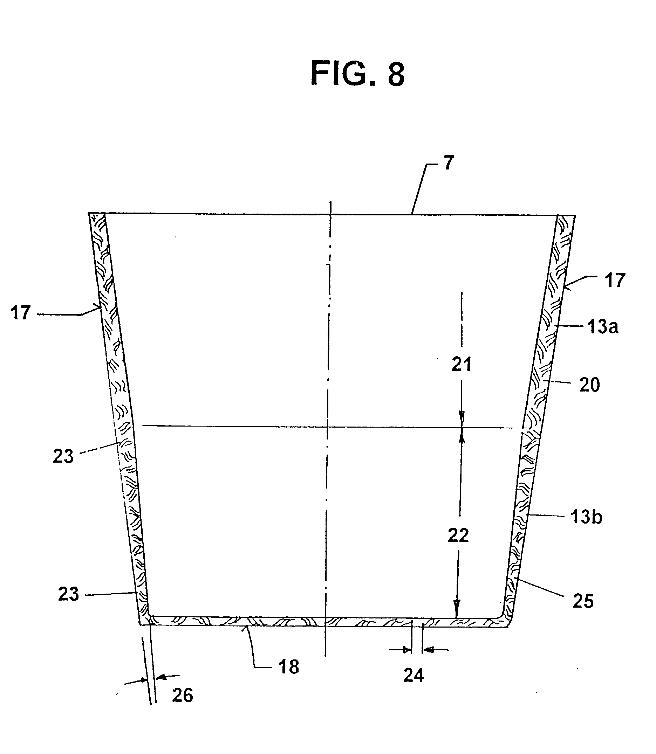

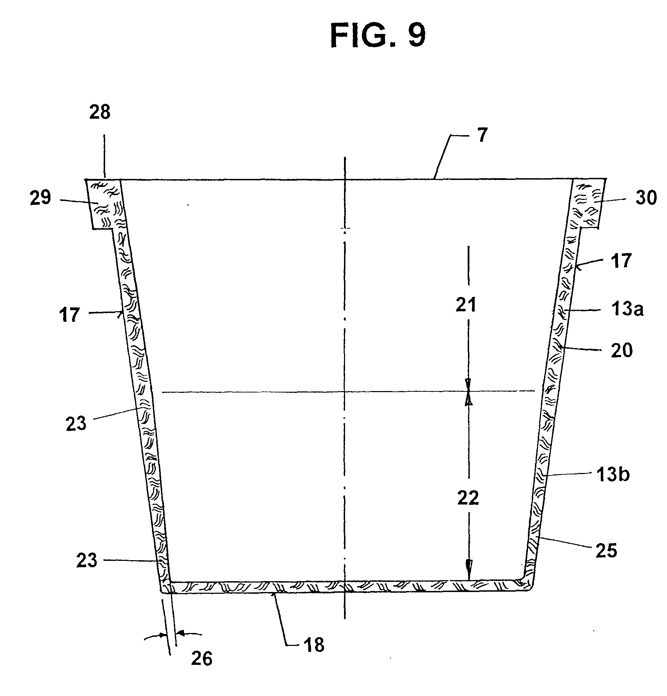

Das Gefäß 7 ist in den Fig. 8 und 9 in zwei Ausführungsformen dargestellt. Ein bei weitestgehend gleichmäßiger Verteilung der Fasern 4a gebildeter oberer Seitenwandteil 17 des Gefäßes 7 weist eine vorherbestimmte größere Wanddicke 20 im oberen Bereich 21 des Gefäßes 7 auf, der in dem unteren Wand- und Bodenbereich 22 mit verminderter Wanddicke 23 übergeht. Der Faserabstand 24 im Bodenteil 25 ist größer als im oberen Seitenwandteil 17. Der außen kegelförmig verlaufende, obere Seitenwandteil 17 besitzt innen eine gleichmäßige Wanddicke 20, und innen oder außen bildet sich daran anschließend ein abweichender Kegelwinkel 26, wobei die verminderte Wanddicke 23 bis zum Bodenteil 25 reduziert ist und der Bodenteil 25 strukturell durchlässiger ausgeführt ist.

Das Gefäß 7 kann gemäß einer dritten Alternativen auch aus einem Vlies bei weitestgehend gleichmäßiger Verteilung der Fasern 4a und daraus hergestellter Faserronden 27 gebildet werden. Dabei wird die Faserronde 27 zeitlich vor der Vulkanisierung gepreßt, und erst danach wird ggfs. das restliche Latex (oder ein gleichwertiger Klebstoff) auf das schon geformte Gefäß 7 aufgebracht und das Gefäß 7 mittels des Formstempels 13 und der Hohlform 19 fertiggepreßt und vulkanisiert.

Das Vlies kann aufgrund der gereinigten, entsalzten, getrockneten und vereinzelten Fasern 4a mit einem gleichmäßigen Faserabstand von durchschnittlich 0,1 bis 5,0 mm hergestellt werden. Dabei handelt es sich jedoch noch um eine sehr dichte Struktur. Dennoch kann die Faserronde 27 auch eine einheitliche Dicke für den Seitenwandteil 17 und den Bodenteil 18 erhalten. Es ist andererseits auch möglich, die Faserronde 27 bzw. das Vlies mit einer Wanddicke von 2,0 bis 4,0 mm herzustellen und den Bodenteil 25 jeweils mit einer etwas geringeren Dicke als der Seitenwandteil 17 und mit einer porigen Struktur. Vorteilhafterweise ist der obere Bereich 21 des Gefäßes 7 mit einer Dicke von 2,0 bis 3,0 mm und der Bodenteil 25 mit einer Dicke von 1,0 bis 2,0 mm gepreßt. Das Latex kann durch Sprühen, wie in Fig. 5 gezeigt, auf den äußeren und/oder inneren Seitenwandteil 17 und/oder den Bodenteil 25 aufgebracht werden. Im oberen Bereich 21 mit dem im Durchmesser größeren Bereich 13a des Gefäßes 7 erfolgt ein höherer Auftrag an Latex als im unteren Bereich 22 mit dem im Durchmesser kleineren Bereich 13b. Ein oberer Randbereich 28 des Gefäßes 7 kann außerdem zumindest zwei diametral gegenüberliegende Haltevorsprünge 29 und 30 für die Greifmittel einer Greifvorrichtung aufweisen (Fig. 9).

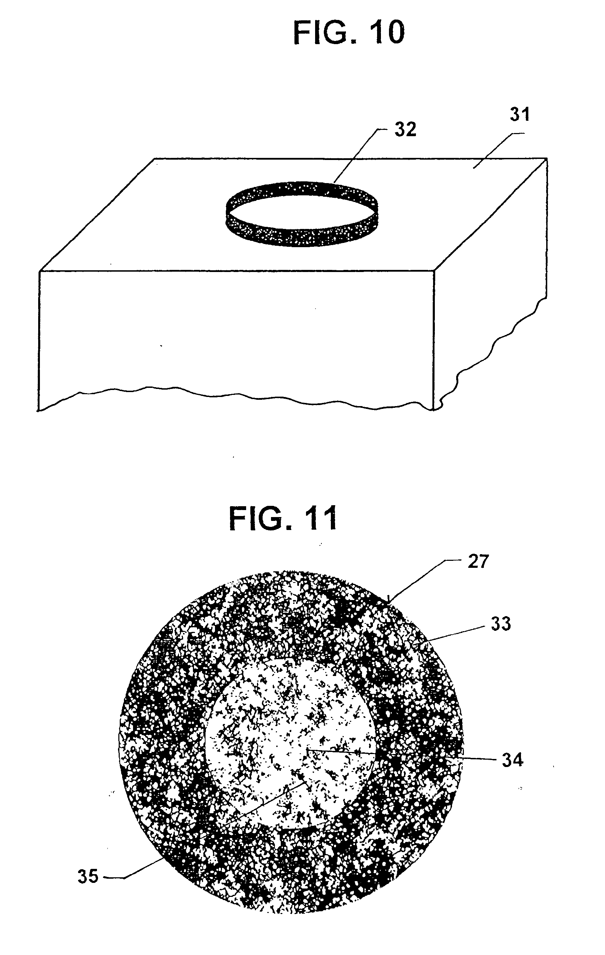

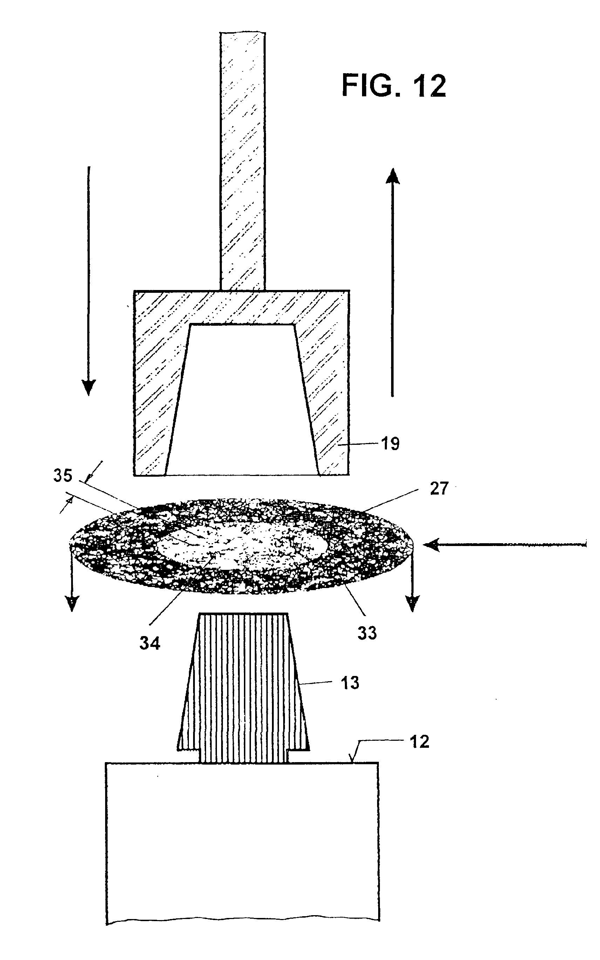

Eine vierte Alternative, die sich weder eines Vlieses noch einer aufgesprühten Schicht von Fasern 4a bedient, ist in den Fig. 10 bis 12 dargestellt. Auf einem Vorbereitungstisch 31 wird ein Metallring 32 flach aufgelegt (Fig. 10) und mit Fasern 4a gefüllt: Dabei wird ein dichter Außenring 33 mit, wie beschrieben, eng beisammenliegenden Fasern 4a und einem Zentrum 34 mit mehr beabstandeten Fasern 4a, also eine dünnere Verteilung, vorgenommen (Fig. 11). Dabei entsteht beim Pressen ein bei weitestgehend gleichmäßiger Verteilung der Fasern 4a gebildeter oberer Bereich 21 des Gefäßes 7 mit größerer Wanddicke 20 gegenüber dem unteren Wand-und Bodenbereich 22. Hierbei ist der obere Seitenwandteil 17 um ein Mehrfaches dicker ausgeführt als der untere Wand- und Bodenbereich 22 und/oder der Bodenteil 25, in dem zwischen den Fasern 4a größere Abstände 35 vorgesehen sind. Wesentlich ist noch, daß der obere Bereich 21 des Gefäßes 7 zum unteren Bereich 22 ein Verhältnis an Latex von 25 : 10 aufweist. Ferner sind im unteren Wand- und Bodenbereich 22 etwa 10 % weniger Fasern 4a verwendet als im oberen Bereich 21 des Gefäßes 7.

### Bezugszeichenliste

- 1: Separator
- 1a: Separatorkammer
- 2: Tisch
- 3: Haufen
- 4: rohe (Kokosnuß-) Fasern
- 4a: trockene (Kokosnuß-) Fasern
- 5: Transportrad
- 6: Sammelbehälter
- 6a: Meßbehälter
- 6b: Meßbehälter
- 6c: Meßbehälter
- 7: Gefäß (mit Formstempel)
- 8: abgewogene Menge
- 9: Menge Latex
- 10: Aufnahmebehälter f. Latex
- 11: Sprühgerät
- 12: Arbeitstisch
- 13: Formstempel
- 13a: im Durchmesser größerer Bereich
- 13b: im Durchmesser kleinerer Bereich
- 14: Drehrichtung
- 15: Latex-Schicht
- 16: Strahlungswärme
- 17: Seitenwandteil
- 18: Bodenteil
- 19: Hohlform
- 20: Wanddicke
- 21: oberer Bereich d. Gefäßes
- 22: unterer Wand- und Bodenbereich
- 23: verminderte Wanddicke
- 24: Faserabstand
- 25: Bodenteil
- 26: Kegelwinkel
- 27: Faserronde
- 28: Randbereich
- 29: Haltevorsprung
- 30: Haltevorsprung
- 31: Vorbereitungsteil
- 32: Metallring
- 33: Außenring
- 34: Zentrum
- 35: Abstände

## Patentansprüche

1. Verfahren zum Herstellen eines Pflanz- oder Kulturgefäßes aus faserigen, biologisch abbaubaren Werkstoffen, insbesondere aus Kokosnußfasern, die zu einem einstückigen Gefäß mit Seitenwandteilen und einem Bodenteil verarbeitet werden, wobei das Gefäß durch heißes Preßformen in einem Formwerkzeug und Verbinden der Fasern durch Latex (Gummibaummilchsaft) vulkanisiert wird,
dadurch gekennzeichnet,
daß gereinigte, getrocknete und vereinzelte Fasern gegen einen mit einer Latexschicht versehenen Formstempel zur Bildung einer Schicht gedrückt werden, daß der Formstempel zusammen mit der Faserschicht in eine passende Hohlform gepreßt wird, daß die Hohlform und/ oder der Formstempel eine begrenzte Zeit beheizt werden und dann Hohlform und Formstempel auseinandergefahren werden und das fertiggepreßte und vulkanisierte Gefäß entnommen wird.

2. Verfahren nach Anspruch 1,
dadurch gekennzeichnet,
daß die Fasern durch Wasser und Wärme und anschließendem Trocknen gereinigt und vereinzelt werden.

3. Verfahren nach einem der Ansprüche 1 oder 2,
dadurch gekennzeichnet,
daß eine für das zu pressende Volumen des Gefäßes abgewogene Menge an (abgelängten) Fasern bereitgestellt wird.

4. Verfahren nach einem der Ansprüche 1 bis 3,
dadurch gekennzeichnet,
daß eine auf die abgewogene Menge der Fasern abgestimmte Menge Latex in einen Behälter für ein Sprühgerät gegeben wird.

5. Verfahren nach einem der Ansprüche 1 bis 4,
dadurch gekennzeichnet,
daß die Fasern mit unterschiedlicher, größerer Schichtdicke auf einen abmessungsmäßig größeren Bereich des mit Latex beschichteten Formwerkzeugs aufgebracht werden und mit einer kleineren Schichtdicke auf einen abmessungsmäßig kleineren Bereich des Formwerkzeugs.

6. Verfahren nach einem der Ansprüche 1 bis 5,
dadurch gekennzeichnet,
daß das mit Fasern beschichtete Formwerkzeug durch Strahlungswärme beheizt und die Mischung aus Fasern und Latex vorvulkanisiert wird.

7. Verfahren nach einem der Ansprüche 1 bis 6,
dadurch gekennzeichnet,
daß das mit Fasern beschichtete Formwerkzeug durch Aussetzen der Sonnenstrahlung vorvulkanisiert wird.

8. Verfahren nach einem der Ansprüche 1 bis 7,
dadurch gekennzeichnet,
daß ein beim Zusammenpressen der hohlen Preßform und des Preßstempels sich bildender Gefäßrand mit unstetem Verlauf rundgeschnitten wird.

9. Pflanz- oder Kulturgefäß aus faserigen, biologisch abbaubaren Werkstoffen, insbesondere aus Kokosnußfasern, die zu einem einstückigen Gefäß mit Seitenwandteilen und einem Bodenteil verarbeitbar sind, wobei das Gefäß durch Formen in einem Formwerkzeug mit Hohlform und einem Preßstempel und unter Vulkanisieren der Fasern mittels Latex (Gummibaummilchsaft) heiß preßbar ist,
dadurch gekennzeichnet,
daß ein bei weitestgehend gleichmäßiger Verteilung der Fasern (4a) gebildeter oberer Seitenwandteil (17) des Gefäßes (7) von vorbestimmter Wanddicke (20) in den unteren Wand- und Bodenbereich (22) mit verminderter Wanddikke (23) übergeht, wobei der Faserabstand (24) im Bodenteil (25) größer als im oberen Seitenwandteil (17) gehalten ist.

10. Pflanz- oder Kulturgefäß nach Anspruch 9,
dadurch gekennzeichnet,
daß der außen kegelförmig verlaufende obere Seitenwandteil (17) innen mit gleicher Wanddicke (20) verläuft und sich daran anschließend, ein abweichender Kegelwinkel (26) bildend, die Wanddicke (23) bis zum Bodenteil (25) reduziert ist.

11. Verfahren zum Herstellen eines Pflanz- oder Kulturgefäßes aus faserigen, biologisch abbaubaren Werkstoffen, insbesondere aus Kokosnußfasern, die zu einem Vlies verarbeitet werden, aus dem Faserronden gebildet werden, die jeweils durch heißes Preßformen in einem Formwerkzeug und Verbinden der Fasern durch Latex (Gummibaummilchsaft) in eine aus einem Boden und Seitenwandteil bestehende, einstückige Gefäßform gebracht werden,
dadurch gekennzeichnet,
daß die Faserronde bei weitestgehend gleichmäßiger Verteilung der Fasern im Vlies vor der Vulkanisierung mit gleichmäßig dicken Seitenwandteilen gepreßt wird und daß danach das Latex auf das geformte Gefäß aufgebracht und das Gefäß im Werkzeug heiß preßvulkanisiert wird.

12. Verfahren nach Anspruch 2 oder 11,
dadurch gekennzeichnet,
daß das Vlies mit einem gleichmäßigen Faserabstand von durchschnittlich 0,1 bis 5,0 mm hergestellt wird.

13. Verfahren nach einem der Ansprüche 11 oder 12,
dadurch gekennzeichnet,
daß die Faserronde mit einer einheitlichen Dicke für den Boden- und Seitenwandteil hergestellt wird.

14. Verfahren nach einem der Ansprüche 11 bis 13,
dadurch gekennzeichnet,
daß die Faserronde bzw. das Vlies mit einer Wanddicke von 2,0 bis 4,0 mm hergestellt wird und der Bodenteil jeweils mit einer etwas geringeren Dicke als der Seitenwandteil.

15. Verfahren nach einem der Ansprüche 11 bis 14,
dadurch gekennzeichnet,
daß der obere Bereich des Gefäßes mit einer Dicke von 2,0 bis 3,0 mm und der Bodenteil mit einer Dicke von 1,0 bis 2,0 mm gepreßt wird

16. Verfahren nach einem der Ansprüche 11 bis 15,
dadurch gekennzeichnet,
daß das Latex durch Sprühen auf den äußeren und / oder inneren Seitenwandteil und den Bodenteil aufgebracht wird.

17. Verfahren nach einem der Ansprüche 11 bis 16,
dadurch gekennzeichnet,
daß im oberen Bereich des Gefäßes oder im Gefäßrand ein höherer Auftrag an Latex erfolgt als im unteren Bereich.

18. Pflanz- oder Kulturgefäß aus faserigen, biologisch abbaubaren Werkstoffen, insbesondere aus Kokosnußfasern, die zu einem Vlies verarbeitbar sind, wobei das Gefäß aus Faserronden durch Erhitzen in einem Formwerkzeug preßbar ist und die Fasern mittels Latex (Gummibaummilchsaft) verbindbar sind, so daß ein einstückiges, aus Boden- und Seitenwandteil bestehendes Gefäß formbar ist,
dadurch gekennzeichnet,
daß ein bei weitestgehend gleichmäßiger Verteilung der Fasern (4a) gebildeter oberer Seitenwandteil (17) des Gefäßes (7) mit größerer Wanddicke (20) gegenüber dem unteren Wand- und Bodenbereich (22) vorgesehen ist , wobei der obere Seitenwandteil (17) um ein Mehrfaches dicker ausgeführt ist als der untere Wand- und Bodenbereich (22) und / oder der Bodenteil (25), in denen zwischen den Fasern (4a) größere Abstände (35) vorgesehen sind.

19. Pflanz- oder Kulturgefäß nach einem der Ansprüche 9,10 oder 18,
dadurch gekennzeichnet,
daß der obere Bereich (21) des Gefäßes (7) zum unteren Bereich (22) ein Verhältnis an Latex von 25:10 aufweist.

20. Pflanz- oder Kulturgefäß nach einem der Ansprüche 9, 10, 18 oder 19;
dadurch gekennzeichnet,
daß im unteren Bereich (22) etwa 10% weniger Fasern (4a) verwendet sind als im oberen Bereich (21).

21. Pflanz- oder Kulturgefäß nach einem der Ansprüche 9, 10, 18, 19 oder 20,
dadurch gekennzeichnet,
daß im oberen Randbereich (28) zumindest zwei diametral gegenüberliegende Haltevorsprünge (29, 30) für die Greifmittel einer Greifvorrichtung vorgesehen sind.
